Europäisches Patentamt

(19) European Patent Office

Office européen des brevets

(11) Numéro de publication: **0 106 829**
**B1**

(12) **FASCICULE DE BREVET EUROPÉEN**

(51) Int. Cl.⁴: **F 16 F 7/00,** F 16 F 3/08,
F 16 F 15/08

(45) Date de publication du fascicule du brevet:
**09.12.87**

(21) Numéro de dépôt: **83870096.1**

(22) Date de dépôt: **26.09.83**

(54) Dispositif d'appui anti-vibratoire.

(30) Priorité: **07.10.82 BE 209199**

(73) Titulaire: **Goossens, Armand, Beukenlaan 35,
B-1990 Hoeilaart (BE)**

(72) Inventeur: **Goossens, Armand, Beukenlaan 35,
B-1990 Hoeilaart (BE)**

(74) Mandataire: **Vanderperre, Robert et al, Bureau VANDER
HAEGHEN 63 Avenue de la Toison d'Or,
B-1060 Bruxelles (BE)**

(43) Date de publication de la demande:
**25.04.84 Bulletin 84/17**

(45) Mention de la délivrance du brevet:
**09.12.87 Bulletin 87/50**

(84) Etats contractants désignés:
**AT CH DE FR GB IT LI LU NL SE**

(56) Documents cités:
**BE - A - 627 794
DE - C - 153 052
DE - C - 698 913
GB - A - 991 469
US - A - 2 572 969
US - A - 3 020 980
US - A - 3 146 979**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif d'appui anti-vibratoire destiné à reprendre les efforts horizontaux et verticaux produits par des charges dynamiques importantes.

Un exemple d'application du dispositif d'appui selon l'invention est la réalisation des appuis de machines textiles. Dans cette application les machines produisent des vibrations qui ont non seulement des effets verticaux mais également des effets horizontaux qui sont même plus importants que les effets verticaux. S'ils ne sont pas adéquatement amortis et repris dans des dispositifs d'isolation, ces effets vibratoires se communiquent à la structure portante du bâtiment et peuvent créer des résonances avec la fréquence propre de vibration de la structure portante. Les effets vibratoires horizontaux, en particulier, peuvent créer une résonance dangereuse avec la fréquence propre de la structure portante, qui est très basse. Pour éviter ces risques de résonance il est donc impératif d'isoler adéquatement de leur structure portante, les machines qui produisent ces vibrations et de les isoler en sorte de reprendre à la fois les effets vibratoires verticaux et les effets vibratoires horizontaux.

Le comportement dynamique de la structure portante de machines textiles, et notamment le comportement dynamique des pieux, a été étudié et pour ce faire, on a déterminé les effets vibratoires des machines textiles sur le plan vertical et sur le plan horizontal en tenant compte du comportement dynamique de ces machines. De cette analyse il ressort qu'il est nécessaire d'isoler les vibrations verticales dans la gamme de fréquences de 15 à 19 Hz et les vibrations horizontales ayant une fréquence inférieure à 2 Hz.

On connaît, par les publications US-A-3 146 979 et US-A-2 572 969, des dispositifs d'appui comprenant un système d'amortissement d'effet horizontal constitué par la superposition d'un élément inférieur, d'une nappe de billes d'acier et d'un élément supérieur de manière que lesdits éléments inférieur et supérieur soient capables de se mouvoir horizontalement l'un par rapport à l'autre sous l'effet d'une composante de force horizontale. Ces dispositifs connus, toutefois, ne donnent pas satisfaction dans les applications où non seulement il faut reprendre efficacement les effets vibratoires verticaux mais où également des charges dynamiques importantes produisent des effets vibratoires horizontaux avec une fréquence propre inférieure à 2 Hz.

L'invention apporte une solution à ce problème par un dispositif d'appui anti-vibratoire selon le préambule de la revendication 1 se caractérisant en ce qu'un système d'amortissement d'effet horizontal est disposé entre deux matelas de matériau élastique disposés horizontalement et en ce qu'il comprend des moyens de serrage agencés pour presser les matelas contre le système d'amortissement d'effet horizontal et mettre l'ensemble en précontrainte.

D'autres particularités du dispositif selon l'invention ressortiront de la description d'un mode de réalisation illustratif.

L'invention est exposée plus en détail dans ce qui suit avec référence aux dessins ci-annexés dans lesquels:

les figures 1 et 2 sont des vues respectivement en coupe transversale et en coupe longitudinale d'un exemple d'exécution du dispositif d'appui selon l'invention;

la figure 3 est une vue en coupe longitudinale du système d'amortissement d'effet horizontal faisant partie du dispositif montré aux figures 1 et 2.

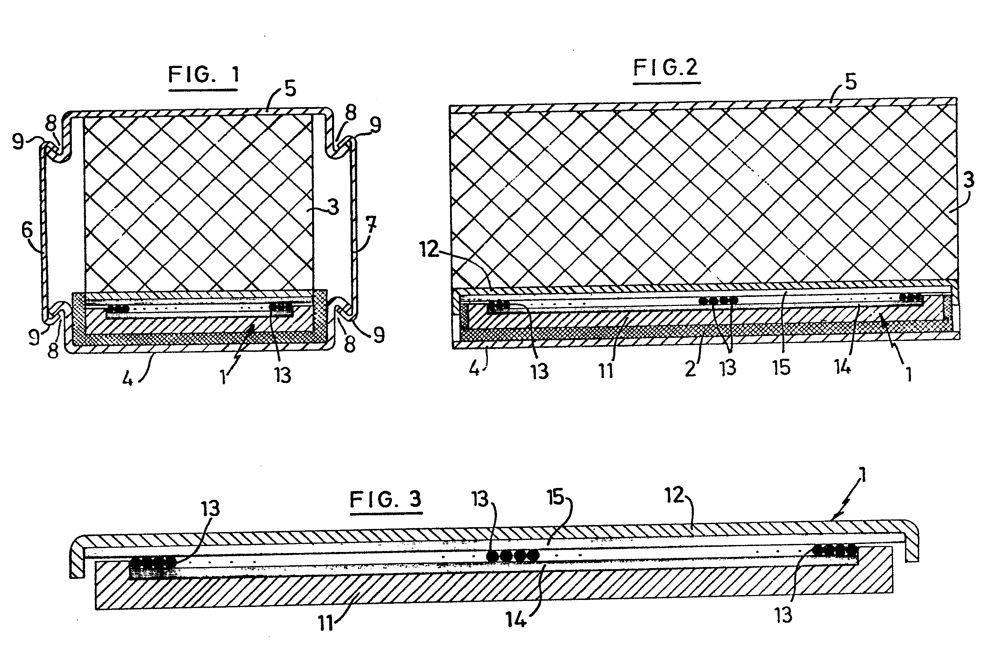

Le dispositif d'appui anti-vibratoire comprend un système d'amortissement d'effet horizontal 1 disposé horizontalement entre deux matelas de matériau élastique 2 et 3, l'ensemble étant mis en précontrainte par des moyens de serrage comprenant les éléments 4 à 7. Le système d'amortissement d'effet horizontal 1 (figure 3) est constitué d'un élément inférieur en acier 11 qui s'étend horizontalement, d'une nappe de billes d'acier 13 disposée sur l'élément inférieur 11, et d'un élément supérieur 12 en acier qui repose sur les billes d'acier 13. L'élément supérieur 12 et l'élément inférieur 11 sont ainsi capables de se mouvoir horizontalement l'un par rapport à l'autre sous l'effet d'une composante de force horizontale. L'élément inférieur 11 a la forme d'un boîtier dans lequel sont logées les billes d'acier 13. Sur le fond du boîtier 11 et sous l'élément supérieur 12 sont disposées des garnitures 14, 15 constituées d'un acier ayant une résistance au frottement élevée.

Les dimensions du système 1 et le nombre de billes d'acier 13 sont fonction des charges à reprendre. Le choix du matériau élastique pour constituer les matelas 2 et 3 est fixé en fonction de la raideur dynamique à réaliser. Des matériaux typiques sont par exemple le liège plastique (matière connue en soi) et le caoutchouc.

Les moyens de serrage, dans l'exemple illustré, sont constitués de deux plaques métalliques 4 et 5 formées avec une gorge 8 le long de leurs bords longitudinaux, et de deux clames 6 et 7 ayant leurs bords longitudinaux 9 profilés en sorte de pouvoir venir se loger dans les gorges 8 des plaques 4 et 5 et accrocher celles-ci avec serrement.

Le dispositif d'appui tel que décrit plus haut permet de supporter des charges dynamiques importantes ayant des composantes verticales et horizontales et permet de reprendre adéquatement à la fois les vibrations verticales et les vibrations horizontales de manière à isoler efficacement la charge (une machine par exemple) de la structure portante. Tandis que les matelas élastiques 2 et 3 reprennent et amortissent les effets verticaux, le système 1 reprend et amortit les effets horizontaux, l'élément supérieur 12 du système avec le matelas supérieur 3 se mouvant horizontalement par rapport à l'élément inférieur 11 du système 1 et le matelas inférieur 2.

Les essais ont montré que le dispositif selon l'invention amortit les effets de vibration horizontaux ayant une fréquence propre inférieure à 17 Hz et les effets de vibration verticaux ayant une fréquence propre inférieure à 1 Hz.

## Revendications

1. Dispositif d'appui anti-vibratoire pour supporter une charge dynamique, comprenant un système d'amortissement d'effet horizontal (1) constitué par la superposition d'un élément inférieur (11), d'une nappe de billes d'acier (13) et d'un élément supérieur (12) de manière que lesdits éléments inférieur et supérieur soient capables de se mouvoir horizontalement l'un par rapport à l'autre sous l'effet d'une composante de force horizontale, caractérisé en ce que le système d'amortissement d'effet horizontal est disposé entre deux matelas de matériau élastique (2, 3) disposés horizontalement et en ce qu'il comprend des moyens de serrage (4–7) agencés pour presser les matelas (2, 3) contre le système d'amortissement d'effet horizontal (1) et mettre l'ensemble en précontrainte.

2. Dispositif selon la revendication 1, caractérisé en ce que l'élément inférieur (11) du système d'amortissement d'effet horizontal a la forme d'un boîtier dans lequel sont disposées les billes d'acier (13) et en ce que l'élément supérieur (12) a la forme d'un couvercle reposant sur les billes d'acier.

3. Dispositif selon la revendication 2, caractérisé en ce que sur le fond du boîtier (11) et sous le couvercle (12) sont placées des garnitures (14, 15) en un acier ayant une résistance au frottement élevée.

4. Dispositif selon la revendication 1, caractérisé en ce que les moyens de serrage comprennent une plaque inférieure (4) et une plaque supérieure (5) ayant leurs bords longitudinaux formés avec des gorges (8), et deux clames (6, 7) ayant leurs bords longitudinaux (9) profilés en sorte de pouvoir se loger dans les gorges (8) des plaques (4, 5) et d'accrocher celles-ci avec serrement.

## Claims

1. Antivibration supporting device for supporting a dynamic load, comprising a horizontal effect damping system (1) including a lower element (11), a layer of steel balls (13) and an upper element (12) superposed one onto another, such that the lower and upper elements are capable of moving horizontally relative to each other under the effect of a horizontal force component, characterized by the horizontal effect damping system (1) being placed between two paddings of elastic material (2, 3) extending in horizontal planes and by comprising clamping means (4–7) arranged for pressing the paddings (2, 3) against the horizontal effect damping system (1) so as to place the assembly in a pretensioning condition.

2. A device according to claim 1, characterized by the lower element (11) of the horizontal effect damping system being in the form of an enclosure in which the stell balls (13) are placed, and by the upper element (12) being in the form of a cover supported by the steel balls.

3. A device according to claim 2, characterized by fittings (14, 15) being placed onto the bottom of the enclosure (11) and under the cover (12), said fittings being made of steel having a high friction strength.

4. A device according to claim 1, characterized by the clamping means including a lower plate (4) and an upper plate (5) having their longitudinal edges formed with a groove (8) and further including two clamps (6, 7) having their longitudinal edges (9) shaped so as to be capable of being engaged in said grooves (8) so as to tightly secure said plates (4, 5).

## Patentansprüche

1. Vibrationsfreie Haltevorrichtung zum Halten einer dynamischen Last, mit einem horizontal wirkenden Dämpfungssystem (1), bei der ein unterer Teil (11), eine Schicht aus Stahlkugeln (12) und ein oberer Teil (13) derart übereinander angeordnet sind, dass der untere und der obere Teil durch Einwirkung einer horizontalen Kraftkomponente horizontal zueinander bewegbar sind, dadurch gekennzeichnet, dass das horizontal wirkende Dämpfungssystem zwischen zwei horizontalen Polstern (2, 3) aus nachgiebigem Material angeordnet ist und dass das Dämpfungssystem Befestigungseinrichtungen (4–7) aufweist, die so angeordnet sind, dass sie die Polster (2, 3) gegen das horizontal wirkende Dämpfungssystem (1) drükken und die Baugruppe vorspannen.

2. Vorrichtung nach Anspruch 1, dadurch gekennzeichnet, dass der untere Teil (11) des horizontal wirkenden Dämpfungssystems ein Gehäuse bildet, in dem die Stahlkugeln (12) angeordnet sind, und dass der obere Teil (13) die Form eines Deckels hat, der auf den Stahlkugeln aufliegt.

3. Vorrichtung nach Anspruch 2, dadurch gekennzeichnet, dass auf dem Boden des Gehäuses (11) und unter dem Deckel (13) Beläge (14, 15) aus Stahl mit hohem Reibwiderstand angeordnet sind.

4. Vorrichtung nach Anspruch 1, dadurch gekennzeichnet, dass die Befestigungseinrichtungen eine untere Platte (4) und eine obere Platte (5) aufweisen, an deren Längsrändern Nuten (8) ausgebildet sind, und zwei Klammern (6, 7), deren Längsränder (9) derartige Profile haben, dass sie in die Nuten (8) der Platten (4, 5) einsetzbar sind und unter Spannung in diese eingreifen.

FIG. 1

FIG. 2

FIG. 3